**Europäisches Patentamt**

**European Patent Office**

**Office européen des brevets**

(19)

(11) Publication number: **0 128 554**
**B1**

(12) **EUROPEAN PATENT SPECIFICATION**

(45) Date of publication of patent specification: **30.03.88**

(21) Application number: **84106572.5**

(22) Date of filing: **08.06.84**

(51) Int. Cl.⁴: **H 04 N 7/10, H 04 N 7/16, H 04 H 1/02**

(54) **Master/slave converter system.**

(30) Priority: **10.06.83 US 503397**

(43) Date of publication of application:
**19.12.84 Bulletin 84/51**

(45) Publication of the grant of the patent:
**30.03.88 Bulletin 88/13**

(84) Designated Contracting States:
**AT BE CH DE FR GB IT LI LU NL SE**

(56) References cited:
**AT-B- 329 646**
**DE-A-2 558 147**
**DE-A-2 725 250**
**US-A-3 518 374**
**US-A-3 859 457**
**US-A-4 031 543**

(73) Proprietor: **TOCOM, INC.**
**P.O. Box 47066**
**Dallas Texas 75247 (US)**

(72) Inventor: **Martin, Thomas F.**
**1629 Villanova Drive**
**Richardson Texas 75081 (US)**
Inventor: **Storey, Robert W.**
**3316 Royal Lane**
**Dallas Texas 75229 (US)**
Inventor: **Schoeneberger, Carl F.**
**2813 Staffordshire**
**Carrollton Texas 75006 (US)**
Inventor: **Chenoweth, John Stephen**
**1405 Angelina Bend Drive**
**Denton Texas 76201 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath Maximilianstrasse 58 D-8000 München 22 (DE)**

Courier Press, Leamington Spa, England.

**Description**

Background of the invention

The present invention concerns a method and apparatus for a master/slave multiple converter system. More particularly, the present invention is concerned with a cable television system having multiple converters at a subscriber location linked together in a master/slave interdependency relationship.

In known cable television communication systems, (DE—A1—2725250), information is processed at each subscriber drop point by a converter, which tunes the transmitted signals to a frequency compatible to the subscriber's television set. The converter may also decode the signal if it has been scrambled at the headend and extract information from the vertical interval of the signal for internal control or for text display on the television screen.

Frequently, for various reasons, a subscriber will lease a system having multiple converters. The subscriber may utilize one converter for general family use and require several additional converters for various specialized uses, such as home security and data bank access.

To encourage the use of multiple converter systems, cable operators offer substantial unit discounts for the lease of additional converters. However, such package arrangements enable unscrupulous subscribers to share their converters with unauthorized parties who thereby avoid the initial subscription charge. Such use is difficult to monitor or detect and leads to substantial subscription losses for cable operators.

Summary of the invention

The present invention is directed to a multiple converter system for use in a one-way communication system as claimed in claim 1. The multiple converter system is utilized at a remote user location in a cable television communication system. One converter in the system is designated as a "master" converter which communicates with the other converters at the user location, designated as "slave" converters. The master converter provides a master control signal on a common bus connecting all of the converters together. The slave converters are activated only upon reception of the master control signal and are useless unless the master signal is received. The master control signal is interrupted only when the master converter or one of the slave converters transmits data to the central office.

A further embodiment of the present invention is directed to a multiple converter system for use in a two-way communication system as claimed in claim 10. The data communications system preferably has a transmitter at the central office for transmitting data signals over a communications link to a plurality of converters at a user's location. The multiple converter system includes a master converter having supervisory means for generating a control signal. At least one slave converter is in communication with the master converter and has actuating means responsive to the control signal from the master converter for enabling the slave converter only after receiving the control signal.

In another more specific embodiment, a master converter is provided at a remote user location in a cable communication system. The master converter is connected to at least one slave converter by a common bus. A splitter unit provides data signals on the bus from the central office and passes data from the master and slave converters back to the central office. The master converter provides a DC offset binary control signal on the common bus which is passed through the splitter unit to each slave converter. The slave converters are enabled only upon reception of the master converter signal.

The foregoing system prohibits cable subscribers from sharing their extra converters with unauthorized users, thereby eliminating loss of subscription revenue to unauthorized users previously suffered by cable operators. If a slave converter is removed from the subscriber system, it will not activate without the master converter activation signal. Likewise, if a master converter is taken by an unauthorized user, the remaining slave converters of the subscriber will not operate.

The concept of the present invention is not necessarily limited to cable television but can be applied to subscription television and other closed circuit television systems. In addition, the process may be utilized in a data communications system not involving television transmission, where converters are used. The concept of the present invention may be utilized with addressable or non-adressable converters and in one-way or two-way cable communication systems.

The present invention is also directed to a method of communicating between a central office and at least one remote user location having a plurality of converters and a data transmitter as claimed in claim 17.

Brief description of the drawings

The novel features believed to be characteristic of the invention are set forth in the appended claims. The preferred mode of the present invention, as well as further objects and advantages thereof, will best be understood by reference to the following detailed description of a preferred embodiment when read in conjunction with the accompanying drawings wherein:

Figure 1 is a block diagram of a preferred embodiment of the present invention disclosing a multiple converter system in a one-way cable communication system;

Figure 2 is a block diagram of an alternate preferred embodiment of the present invention showing multiple converters in a two-way cable communication system;

Figure 3 is a block diagram of a preferred embodiment of one of the converters shown in Figure 1;

Figure 4 is a logic flow diagram of the operation of the master converter shown in Figure 1;

Figure 5 is a logic flow diagram of the operation of the slave converter shown in Figure 1;

Figure 6 is a block diagram of the transmitter shown in Figure 2; and

Figure 7 is a logic flow diagram of the operation of the transmitter shown in Figure 6.

Detailed description of the drawings

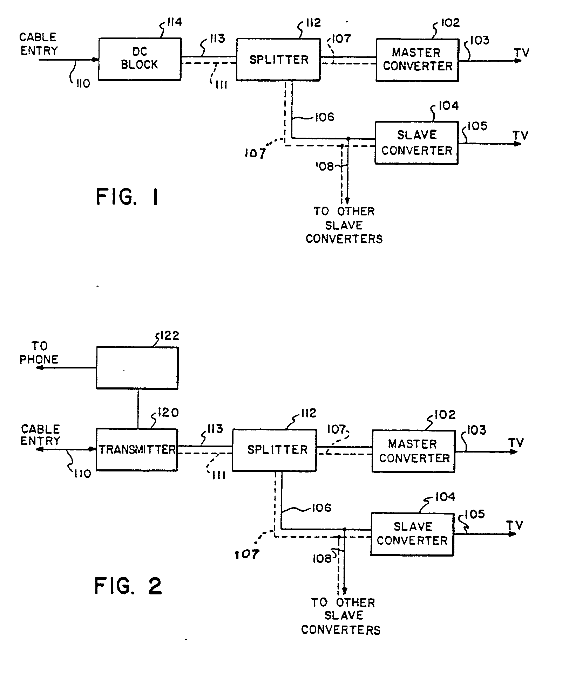

With reference now to Figure 1, a multiple converter user system 100 is shown as a preferred embodiment of the present invention. System 100 includes a master converter 102 and a slave converter 104 electrically connected together by a subscriber control bus 106. Cable communication data and programming signals are provided by cable entry line 110 connecting to a cable plant at a subscriber drop point (not shown). The cable entry line passes these signals to converters 102 and 104 by way of a splitter 112 which is connected to subscriber control bus 106. Splitter 112 divides the cable signals into multiple signals, one for each of the converters in the user system. A conventional DC blocking unit 114, such as a capacitor, is positioned on cable entry line 110 upstream of splitter 112 to block transmission of DC offset square wave signals which are passed between the converters.

It will be understood that additional slave converters may also be connected in parallel with splitter 112 on an extension of subscriber control bus 106 shown by dotted line 108. Preferably master converter 102 and slave converters 104 utilize identical circuitry and are different only in the programming of the microprocesser, as described herein.

Figure 2 discloses an alternate preferred embodiment of the present invention in a cable communication system having two-way capability to communicate to the central office using a transmitter such as a telephone dialer or an R-F transmitter. Master converter 102, slave converter 104 and splitter unit 112 are substantially identical to those disclosed in Figure 1. Likewise, subscriber control bus 106 and cable entry line 110 are unchanged from that disclosed in Figure 1. To enable upstream communication, a transmitter unit 120 is shown on cable entry line 110 connected to splitter unit 112 by line 113. Preferably, the conventional DC blocking circuitry 114 in Figure 1 is embodied internally in transmitter unit 120. A transformer 122 is connected to transmitter unit 120 for transforming the data signal voltage preparatory to transmission to the central office.

In both Figure 1 and Figure 2, the master and slave converters have output lines 103 and 105, respectively, which direct signals to the subscriber units, usually television sets. Also, in Figures 1 and 2, dotted line 107 running parallel to subscriber control bus (SCB) 106 and dotted line 111 running parallel to cable entry line 110 signify low frequency data paths communicating the master control signal between the master converter 102 and the slave converters 104. In the two-way system of Figure 2, the dotted line also represents low frequency data being sent from the converters to the transmitter 120.

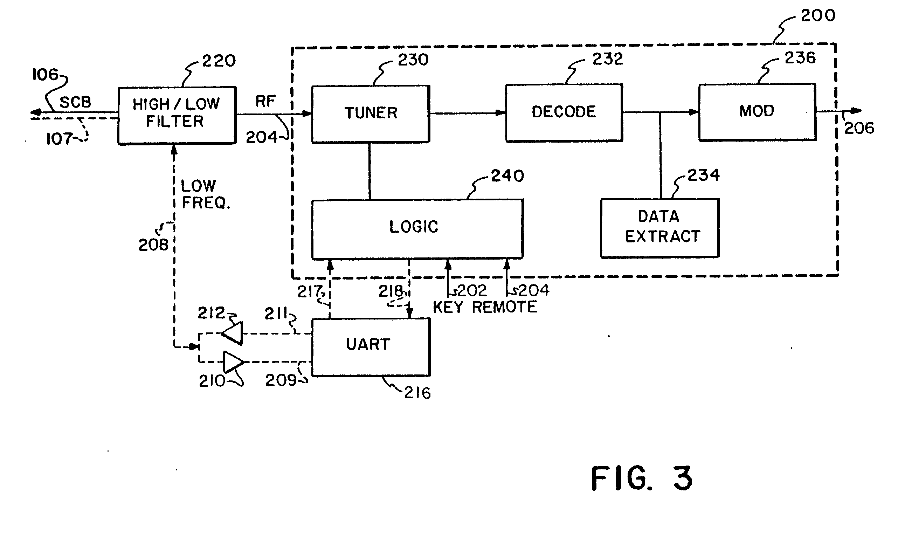

Turning now to Figure 3, a block diagram shows the layout of master converter 102. It is understood that slave converter 104 preferably has identical circuitry to that shown in Figure 3. Master converter 102 utilizes a conventional converter unit 200 having keyboard and remote inputs 202 and 204 from the user and a R-F signal output 206 to the user's television set. Converter unit 200 is preferably a conventional unit such as model 5504B made by Tocom, Incorporated of Irving, Texas.

Interfacing between the subscriber control bus 106 and converter 200 is a conventional high/low filter unit 220. This unit separates the R-F high frequency television program signals and data signals from the low frequency control signal transmission between converters at the remote user location and the low frequency data signals from the converters to the transmitter. The R-F signals are transmitted on line 204 to converter 200. The low frequency control data signals are transmitted on data line 208 (indicated by a dotted line) through a conventional input buffer 210 to a conventional receiver/transmitter unit 216 such as a universal asynchronous receiver transmitter unit (UART). Return data from unit 216 is transmitted through a conventional output buffer 212 along data line 208 back to the high/low filter unit 220.

The R-F signals are processed in a conventional manner by converter 200. The signals are demodulated by a tuner 230 and are descrambled by a decoder 232, both under the direction of logic unit 240. A data extractor 234 removes data from the vertical interval of the demodulated signal and transmits it to logic unit 240 for control processing. The signal is then remodulated by modulator 236 to a frequency compatible for the user's television set and is output on line 206.

UART unit 216 provides the input/output data link with logic unit 240. The master control signal transmitted between converters is processed by UART unit 216. Also, the UART unit 216 transmits converter data from logic unit 240 back to the central office, by way of transmitter 120, shown in Figure 2.

UART unit 216 comprises conventional circuitry, preferably UART chip No. 6402 made by Intersil Corporation. Buffer units 210 and 212 comprise simple open-collector common grounded-emitter transistor circuitry buffering the input and output data.

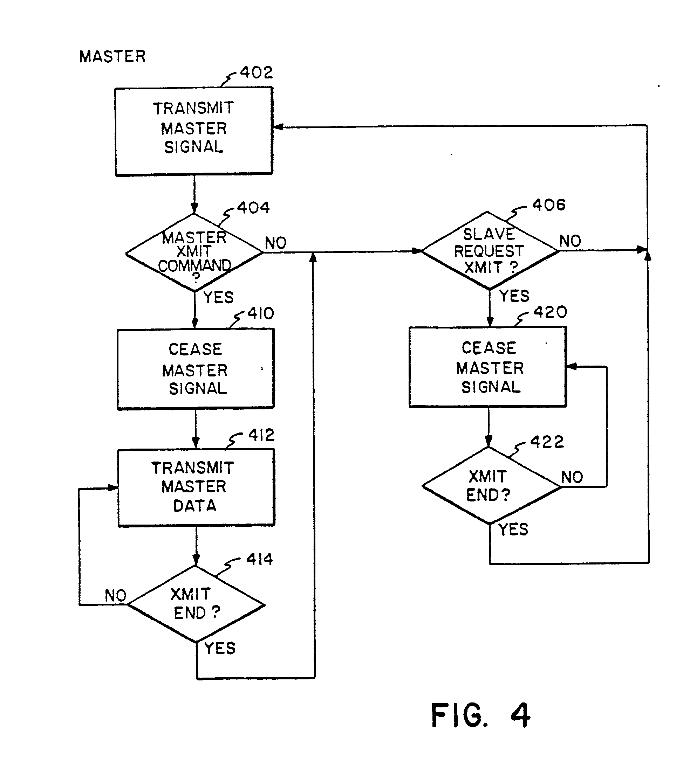

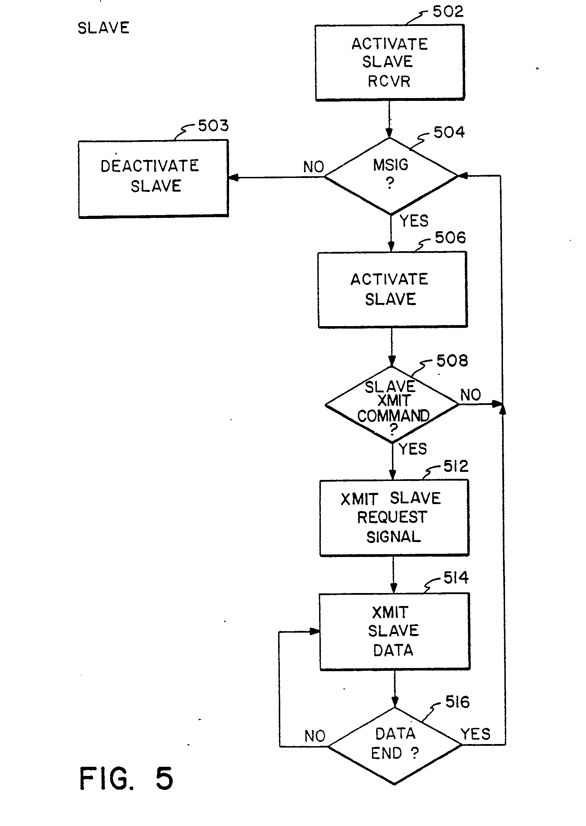

Referring now to Figures 4 and 5, logic diagrams describe the operation of master converter 102 and slave converter 104, respectively. Reference will be made to Figures 1 to 3 during the description of Figures 4 and 5 to identify the elements carrying out the logic steps shown therein. As shown in Figure 4, at step 402, the master converter outputs a master control signal on subscriber control bus 106. Preferably this is a simple DC offset square wave the center conductor of the SCB 106. The master converter 102 interrupts this pattern only to transmit data or to allow a slave converter 104 to transmit data upstream to the central office, sometimes referred to as the headend.

The slave converter senses the presence of a master converter on the SCB 106 by detecting the presence of the master signal. If it fails to detect the master signal of the master converter within a short period of time, preferably no more than 10 seconds, the slave converter is disabled. The slave converter 104 will transmit its data upstream only when commanded to do so by the central office and only after the master converter 102 has interrupted its master signal.

Referring more specifically to Figure 4, at step 402, the master converter 102 transmits its master signal, preferably a DC offset square wave, to activate slave converters 104. At decision block 404, master converter 102 inquires as to whether the central office has transmitted a signal commanding the master converter to send its data upstream to the home office. If not, a similar test is made at step 406 to determine whether a slave converter 104 has received a similar command from the central office and requests to transmit its data. If not, the master converter continues to transmit its master signal as indicated at logic step 402.

If a central office command is received by the master converter, its ceases transmitting its master signal at step 410 and begins transmitting the data from the master converter 102 to the central office as shown in logic step 412. Master converter 102 continues transmitting as shown on decision block 414 until the transmission is completed. At that time, a test is again made to determine whether the slave converter 104 needs to transmit data to the central office. If not, the master converter resumes transmission of its master signal as shown in logic step 402.

If one of the slave converters 104 has been commanded to transmit its data to the central office, the master converter ceases transmission of its master signal as indicated at logic step 420 and continues to test for the end of the slave data transmission at decision block 422 until the transmission is finished. At that time, master converter 102 resumes transmission of its master signal as shown at logic step 402.

In Figure 5, the specific steps carried out by the slave converter 104 is shown. The slave converter first activates its receiver, preferably the receiver portion of UART unit 216 disclosed in Figure 3, as shown at logic step 502. The rest of the slave is not activated until it detects the presence of a master signal, as shown at step 504. At that time, the slave converter 104 is activated, as shown at step 606, and an inquiry is made, at decision step 508, as to whether the central office has commanded transmission of the slave converter data. If not, the slave converter continues to test for the presence of the master signal on SCB 106 as shown at logic step 504. If a master signal is not received, the slave is deactivated, as shown at step 503, only the slave receiver remaining active to test for the resumption of master signal transmission.

If the central office commands transmission of the slave converter data, then slave converter 104 transmits a request transmission signal to the master converter 102 on SCB 106 as shown at logic step 512. This slave signal notifies the master converter of the need for the slave converter to transmit data over SCB 106 and effectively requests the master converter to cease transmitting its master signal. The slave converter then assumes that the master signal has ceased and then begins to transmit its data, at step 514, to the central office. The slave converter tests for the end of the data transmission at logic step 516 and continues transmission until the data has been sent. At that time, the slave converter again tests for the master signal at decision block 504 and if the master signal is present, the slave converter remains activated.

Looking again at Figure 3, a more specific description is provided of the preferred embodiment of the master and slave converters 102 and 104 and the signals sent between those converters. As previously mentioned, the master signal from the master converter 102 is preferably a DC binary signal equivalent of a square wave switching between 0 and 5 volts. The square wave frequency can fall anywhere between 100 and 1,000 hertz, preferably being at about 300 hertz. This signal is generated by logic unit 240 and transmitted by UART unit 216 on lines 211 and 208 to R-F/data separator unit 220 to SCB 106. The master signal of master converter 102 is also fed back from SCB 106 on lines 208 and 209 to the master converter. Thus, the master converter can sense the condition on SCB 106 to determine that the slave converters are open and receiving the master signal. If a slave converter needs to send a signal to the central office, the slave converter sends a request to transmit signal to the master converter. Preferably this is done by the slave converter simply grounding input line 209, thereby pulling data line 208 and hence SCB 106 to ground. This grounded bus 106 is sensed by master converter 102 through its input buffer circuitry line 209. The master converter thereby determines that a slave converter needs to transmit its data to the home office, and ceases transmission of its master signal on SCB 106 until the slave converter completes transmission. Preferably, the master converter is programmed to automatically resume transmission of the master signal after a predetermined period of time.

Preferably, the master signal is also used to control the return transmitter unit 120 of the alternate embodiment shown in Figure 2. Transmitter 120 is preferably automatically activated whenever it senses an absence of the master signal for a predetermined period of time. Transmitter unit 120 remains activated until the data transmission ceases for a predetermined period of time. Once the master signal is received, transmitter unit 120 turns off and remains off until one of the converters is again ready to transmit. Using this approach, no separate control line is required to activate and deactivate transmitter unit 120.

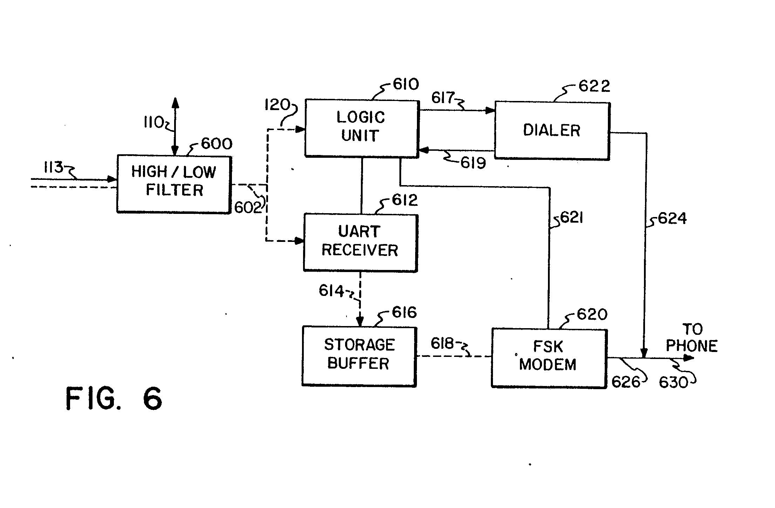

With reference now to Figure 6, a preferred embodiment of transmitter 120 is shown wherein the transmitter is a telephone dialing system for sending the master or slave converter data to the central office over a telephone line. Cable line 113 connecting transmitter line 120 with splitter 112 feeds into a conventional high/low filter 600, preferably similar to high/low filter 220, which separates the R-F program and data signals from the low frequency master control and data signals. The R-F program and data signals are output on cable entry line 110 for interface with the rest of the cable transmission system. The low frequency data information is output on line 602 which feeds to a logic unit 610 and a UART receiver 612. The UART receiver in turn feeds the low frequency data on line 614 to a storage buffer 616 which has an output 618 to a FSK modem transmitter unit 620. The low frequency data is also received by logic unit 610 having a two-way interface with a conventional telephone dialer 622 by way of lines 617 and 619. The logic unit also has a control output by line 621 to FSK modem unit 620. Dialer 622 outputs on line 624 to telephone line 630, and FSK modem 620 has an output line 626, also to phone line 630.

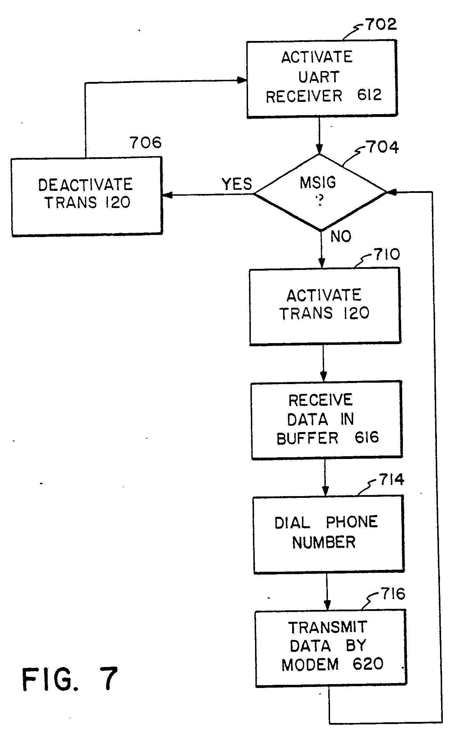

Referring now to Figure 7, transmitter 120 normally is turned off except for UART receiver 612 as shown at logic step 702. Receiver 612 continues to test for the presence of a master signal from the master converter, as shown at decision block 704. As long as the master signal is received, transmitter 120 remains deactivated as shown at step 706 except for the UART receiver 612.

When the maser signal is turned off, transmitter 120 senses that data from one of the converters is about to be transmitted to the central office. The transmitter 120 is thereby fully activated at step 710 and receives the data at 712 through UART receiver 612 for storage in buffer 616. At the same time, logic unit 610 initiates dialer 622 which dials the appropriate telephone number for transmission to the central office, as shown at step 714. As soon as the central office is ready for transmission, dialer 622 informs logic unit 610 which then commands FSK modem 620 to transmit the converter data on telephone line 630. Once transmission has been completed, transmitter 120 goes back into the initial testing mode, looking for the presence of a master signal as shown at decision block 704. In a preferred mode, the master converter resumes transmission of its master signal as soon as the data burst has been transmitted to the storage buffer 616. Thus, by the time the data information has been transmitted on the telephone line, the UART receiver 612 has already been receiving the master signal for some time.

It is understood that a similar arrangement can be carried out in the event that transmitter 120 is an R-F transmitter in a two-way cable communication system rather than functioning as a dialer unit shown in Figure 6. In most cases,. if a R-F transmitter is utilized, there is no need for a storage buffer, and the data is transmitted directly by way of a FSK transmitter upstream on the coaxial cable interconnecting with the rest of the communication system.

## Claims

1. A multiple converter system for use in a one-way communications system having a transmitter at a central office for transmitting data signals over a communications link and a converter at a user's location for receiving and processing the data signals, the multiple converter system comprising:

a master converter (102, Fig. 1) at the user's location having supervisory means for generating a master control signal,

at least one slave converter (104) in communication with the master converter having disabling means responsive to the master control signal from the master converter for disabling the slave converter in response to the absence of communication of the master control signal to the slave converter, and

splitter means (112) in communication with the master converter and the slave converter for passing the data signals from the central office to the master converter and the slave converter.

2. The system of Claim 1 wherein the master converter (102) and slave converter (104) are connected by a common bus to the splitter means (112).

3. The system of Claim 1 wherein the common bus passes both the master control signal and the data signals which are transmitted over a common bus between the master converter (102) and the slave converter (104).

4. The system of Claim 1 wherein the master control signal is a low frequency signal and the data signals from the central office are high frequency signals.

5. The system of Claim 4 wherein the master control signal comprises a DC offset square wave.

6. The system of Claim 4 and further comprising blocking means between the splitter means and the central office for preventing passage of the low frequency master control signal to the central office.

7. The system of Claim 1 wherein the communication system is a cable system.

8. The system of Claim 1 wherein the communication system is a cable television system and the data signals are R-F television program signals.

9. The system of Claim 1 further comprising a transmitting means for transmitting data from the master converter (102) to the central office, said transmitting means being actuable by the absence of communication of the master control signal to the transmitting means from the master converter.

10. A mutliple converter system for use in a two-way communication system for transmitting data signals between a central office and a plurality of remote user locations, the multiple converter system comprising:

a master converter (102, Fig. 2) at a user's location having supervisory means for generating a master control signal,

at least one slave converter (104) at the user's location in communication with the master converter having actuating means responsive to the master control signal from the master converter for enabling the slave converter only upon reception of the master control signal,

splitter means (112) in communication with the master converter and the slave converter for passing data signals between the central office and the master converter and slave converter; and

transmitter means (120) in communication with the splitter means and upstream therefrom for passing data signals from the master converter and slave converter to the central office.

11. The system of Claim 10 wherein the master converter and slave converter are connected by a common bus with the splitter means.

12. The system of Claim 11 wherein the master control signal and the data signals are transmitted over the common bus.

13. The system of Claim 10 wherein the transmitter is deactivated in response to the master control signal.

14. The system of Claim 10 wherein the master control signal is a low-frequency repetitive signal and the data signals are high frequency information carrying signals.

15. The system of Claim 14 wherein the transmitter includes circuitry for blocking transmission of the low frequency master signal upstream in the communication system.

16. The system of Claim 15 comprising a two-way cable communications system.

17. A method of communicating between a central office and at least one remote user location having a plurality of converters and a data transmitter, the method comprising:

transmitting a master control signal from a master converter (102) at the remote user location to at least one slave converter (104) at the same remote user locations;

activating the slave converter only in response to reception of the master control signal;

receiving a command signal from the central office for transmission of data in the master converter to the central office;

terminating transmission of the master control signal at the remote user locations;

transmitting the data from the master converter to the central office utilizing the data transmitter; and

resuming transmission of the master control signal to the slave converters at the remote user location.

18. The method of Claim 17 wherein the data transmitter is activated only upon interruption of reception of the master control signal.

**Patentansprüche**

1. Mehrfachumsetzersystem für die Verwendung in einem Einweg-Übertragungssystem mit einem Sender in einem Zentralamt zur Aussendung von Datensignalen über eine übertragungsleitung und einem Umsetzer an einer Teilnehmerstelle zum Empfang und zur Verarbeitung der Datensignale, wobei das Mehrfachumsetzersystem enthält:

einen Hauptumsetzer (102, Fig. 1) an der Benutzerstelle mit einer überwachungseinrichtung zum Erzeugen eines Hauptsteuersignals,

wenigstens einen Nebenumsetzer (104), der mit dem Hauptumsetzer in Verbindung ist und eine Sperreinrichtung aufweist, die auf das Hauptsteuersignal von dem Hauptumsetzer anspricht, um den Nebenumsetzer in Abhängigkeit von der Abwesenheit einer Zuführung des Hauptsteuersignals zum Nebenumsetzer zu sperren,

eine Teilereinrichtung (112), die mit dem Hauptumsetzer und dem Nebenumsetzer in Verbindung ist, um die Datensignale vom Zentalamt dem Hauptumsetzer und dem Nebenumsetzer zuzuleiten.

2. System nach Anspruch 1, bei dem der Hauptumsetzer (102) und der Nebenumsetzer (104) mittels eines gemeinsamen Bus mit der Teilereinrichtung (112) verbunden sind.

3. System nach Anspruch 1, bei dem der gemeinsame Bus sowohl das Hauptsteuersignal als auch die Datensignale überträgt, die über einen gemeinsamen Bus zwischen dem Hauptumsetzer (102) und dem Nebenumsetzer (104) übertragen werden.

4. System nach Anspruch 1, bei dem das Hauptsteuersignal ein Niederfrequenzsignal ist und die Datensignale vom Zentralamt Hochfrequenzsignale sind.

5. System nach Anspruch 4, bei dem das Hauptsteuersignal eine gleichstrommäßig versetzte Rechteckwelle enthält.

6. System nach Anspruch 4 und weiterhin enthaltend eine Blockiereinrichtung zwischen der Teilereinrichtung und dem Zentralamt, um einen Durchgang des niederfrequenten Hauptsteuersignals zum Zentralamt zu verbindern.

7. System nach Anspruch 1, bei dem das übertragungssystem ein Kabelsystem ist.

8. System nach Anspruch 1, bei dem das übertragungssystem ein Kabelfernsehsystem ist und die Datensignale Hochfrequenz-Fernsehprogrammsignale sind.

9. System nach Anspruch 1, weiterhin enthaltend eine übertragungseinrichtung zum übertragen von Daten von dem Hauptumsetzer (102) zum Zentralamt, wobei die übertragungseinrichtung durch die Abwesenheit einer übertragung des Hauptsteuersignals zu der übertragungseinrichtung von dem Hauptumsetzer betätigbar ist.

10. Mehrfachumsetzersystem zur Verwendung in einem Zweiwegübertragungssystem zur übertragung von Datensignalen zwischen einem Zentralamt und mehreren entfernten Teilnehmerstellen, wobei das Mehrfachumsetzersystem enthält.

einen Hauptumsetzer (102, Fig. 2) an einer Benutzerstelle mit einer Überwachungseinrichtung zur Erzeugung eines Hauptsteuersignals,

wenigstens einen Nebenumsetzer (104) an der Benutzerstelle, der mit dem Hauptumsetzer in Verbindung ist und eine Betätigungseinrichtung aufweist, die auf das Hauptsteuersignal von dem Hauptumsetzer anspricht, um den Nebenumsetzer nur bei Empfang des Hauptsteuersignals zu ermächtigen,

eine Teilereinrichtung (112), die mit dem Hauptumsetzer und dem Nebenumsetzer in Verbindung ist, um Datensignale zwischen dem Zentralamt und dem Hauptumsetzer und dem Nebenumsetzer zu übertragen; und

eine Sendeeinrichtung (120), die mit der Teilereinrichtung stromaufwärts derselben in Verbindung ist, um Datensignale von dem Hauptumsetzer und dem Nebenumsetzer zum Zentralamt zu übertragen.

11. System nach Anspruch 10, bei dem der Hauptumsetzer und der Nebenumsetzer über einen gemeinsamen Bus mit der Teilereinrichtung verbunden sind.

12. System nach Anspruch 11, bei dem das Hauptsteuersignal und die Datensignale über den gemeinsamen Bus übertragen werden.

13. System nach Anspruch 10, bei dem der Sender in Abhängigkeit von dem Hauptsteuersignal stillgesetzt wird.

14. System nach Anspruch 10, bei dem das Hauptsteuersignal ein niederfrequentes, sich wiederholendes Signal ist und die Datensignale hochfrequenzinformationtragende Signale sind.

15. System nach Anspruch 14, bei dem der Sender eine Schaltung zur Blockierung einer Übertragung des niederfrequenten Hauptsignals stromaufwärts im Übertragungssystem aufweist.

16. System nach Anspruch 15, enthaltend ein Zweiweg-Kabelübertragungssystem.

17. Verfahren zur Übertragung zwischen einem Zentralamt und wenigstens einer entfernten Benutzerstelle mit mehreren Umsetzern und einém Datensender, enthaltend:

Aussenden eines Hauptsteuersignals von einem Hauptumsetzer (102) an der entfernten Benutzerstelle zu wenigstens einem Nebenumsetzer (104) an denselben entfernen Benutzerstellen;

Aktivieren des Nebenumsetzers nur in Abhängigkeit vom Empfang des Hauptsteuersignals;

Empfangen eines Steuersignals vom Zentralamt zur übertragung von Daten im Hauptumsetzer zum Zentralamt;

Beenden der Aussetzung des Hauptsteuersignals an den entfernen Benutzerstellen;

Aussenden der Daten von dem Hauptumsetzer zum Zentralamt unter Benutzung des Datensenders; und

Wiederaufnahme der Aussendung des Hauptsteuersignals zu den Nebenumsetzern an der entfernten Benutzerstelle.

18. Verfahren nach Anspruch 17, bei dem der Datensender nur bei Unterbrechung des Empfangs des Hauptsteuersignals aktiviert wird.

## Revendications

1. Un système à transpondeurs multiples, utilisable dans un système de transmission unidirectionnel, équipé d'un émetteur placé au bureau central, qui émet des signaux de données par l'intermédiaire d'un lien de transmission, et d'un transpondeur placé chez l'usager, qui reçoit et traite les signaux de données, le système à transpondeurs multiples comprenant:

un transpondeur principal (102, Fig. 1), placé chez l'usager, ayant un dispositif de surveillance pour générer un signal de commande principal,

au moins un transpondeur secondaire (104) en communication avec le transpondeur principal, muni d'un dispositif d'arrêt répondant au signal de commande principal, provenant du transpondeur principal, pour arrêter le transpondeur secondaire en réponse à l'absence de communication du signal de commande principal su transpondeur secondaire, et

un dispositif de séparation (112) en communication avec le transpondeur principal et avec le transpondeur secondaire pour transmettre les signaux de données du bureau central vers le transpondeur principal et vers le transpondeur secondaire.

2. Le système de la revendication 1, dans lequel le transpondeur principal (102) et le transpondeur secondaire (104) sont reliés par un bus commun au dispositif de séparation (112).

3. Le système de la revendication 1, dans lequel le bus commun envoie à la fois le signal de commande principal et les signaux de données qui sont émis sur un bus commun entre le transpondeur principal (102) et le transpondeur secondaire (104).

4. Le système de la revendication 1, dans lequel le signal de commande principal est un signal à basse fréquence, et les signaux de données provenant du bureau central sont des signaux à haute fréquence.

5. Le système de la revendication 4, dans lequel le signal de commande principal comprend une onde carrée décalée en courant continu.

6. Le système de la revendication 4, et comprenant de plus un dispositif de blocage entre le dispositif de séparation et le bureau central pour éviter le passage du signal de commande principal à basse fréquence vers le bureau central.

7. Le système de la revendication 1, dans lequel le système de communication est un système par câble.

8. Le système de la revendication 1, dans lequel le système de communication est un système de télévision par câble, et les signaux de données sont des signaux de programme de télévision HF.

9. Le système de la revendication 1, comprenant de plus un dispositif d'émission pour émettre des données depuis le transpondeur principal (102) vers le bureau central, ledit dispositif d'émission pouvant être mis en marche par l'absence de communication, par le transpondeur principal, du signal de commande principal au dispositif d'émission.

10. Un système à transpondeurs multiples, utilisable dans un système de communication bi-directionnel, pour émettre des signaux de données entre un bureau central et plusieurs sites utilisateurs à distance, le système à transpondeurs multiples comprenant:

un transpondeur principal (102, Fig. 2), placé chez un usager, et muni d'un dispositif de surveillance pour générer un signal de commande principal,

au moins un transpondeur secondaire (104), placé chez l'usager, en communication avec le transpondeur principal, muni d'un dispositif de mise en marche répondant au signal de commande principal, provenant du transpondeur principal, pour mettre le transpondeur secondaire en marche, seulement après réception du signal de commande principal, et

un dispositif de séparation (112) en communication avec le transpondeur principal et avec le transpondeur secondaire pour transmettre les signaux de données du bureau central vers le transpondeur principal et vers le transpondeur secondaire, et

un dispositif d'émission (120) en communication avec le dispositif de séparation et en amont de celui-ci pour transmettre les signaux de données du transpondeur principal et du transpondeur secondaire vers le bureau central.

11. Le système de la revendication 10, dans lequel le transpondeur principal et le transpondeur secondaire sont reliés par un bus commun au dispositif de séparation.

12. Le système de la revendication 11, dans lequel le signal de commande principal et les signaux de données sont émis sur le bus commun.

13. Le système de la revendication 10, dans lequel l'émetteur est désactivé en réponse au signal de commande principal.

14. Le système de la revendication 10, dans lequel le signal de commande principal est un signal répétitif à basse fréquence, et les signaux de données sont des signaux à haute fréquence porteurs d'informations.

15. Le système de la revendication 14, dans lequel l'émetteur inclut un ensemble de circuits pour bloquer l'émission du signal principal à basse fréquence en amont dans le système de communication.

16. Le système de la revendication 15, comprenant un système de transmission par câble bi-directionnel.

17. Une méthode de communication entre un bureau central et au moins un site d'utilisation à distance équipé de plusieurs transpondeurs et d'un émetteur de données, la méthode comprenant:

l'émission d'un signal de commande principal depuis un transpondeur principal (102), placé chez un usager à distance, vers au moins un transpondeur secondaire (104) placé au même point d'utilisation éloingé;

la mise en marche du transpondeur secondaire uniquement en réponse à la réception du signal de commande principal;

la réception d'un signal de commande provenant du bureau central pour l'émission de données dans le transpondeur principal vers le bureau central;

la fin de l'émission du signal de commande principal chez l'usager;

l'émission des données depuis le transpondeur principal vers le bureau central, en utilisant l'émetteur de données; et

la reprise de l'émission du signal de commande principal vers les transpondeurs secondaires, placés chez l'usager.

18. La méthode de la revendication 17, dans laquelle l'émetteur de données n'est activé qu'après interruption de la réception du signal de commande principal.

**0 128 554**

FIG. 1

FIG. 2

1

FIG. 3

FIG. 4

SLAVE

FIG. 5

FIG. 6

0 128 554

ACTIVATE
UART
RECEIVER 612
702

706
DEACTIVATE
TRANS 120

MSIG ?
704

YES

NO

ACTIVATE
TRANS 120
710

RECEIVE
DATA IN
BUFFER 616

DIAL PHONE
NUMBER
714

TRANSMIT
DATA BY
MODEM 620
716

FIG. 7

6